(19) Europäisches Patentamt
European Patent Office
Office européen des brevets

(11) **EP 3 044 552 B1**

(12) **EUROPEAN PATENT SPECIFICATION**

(45) Date of publication and mention
of the grant of the patent:
**01.04.2020 Bulletin 2020/14**

(51) Int Cl.:
***G01G 19/08*** *(2006.01)*

(21) Application number: **14771482.8**

(22) Date of filing: **09.09.2014**

(86) International application number:
**PCT/US2014/054719**

(87) International publication number:
**WO 2015/035362 (12.03.2015 Gazette 2015/10)**

(54) **ONLINE MASS ESTIMATION**

ONLINE-MASSENSCHÄTZUNG

ESTIMATION DE MASSE EN LIGNE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **09.09.2013 US 201361875163 P**

(43) Date of publication of application:
**20.07.2016 Bulletin 2016/29**

(73) Proprietor: **Dana Limited
Maumee, OH 43537 (US)**

(72) Inventors:
• **VERSTEYHE, Mark, R. J.
B-8020 Oostkamp (BE)**
• **MAESSEN, Mark, M. A.
NL-6043 WC Roermond (NL)**
• **GOOSSENS, Stijn
B-9420 Erpe-Mere (BE)**

(74) Representative: **Pfenning, Meinig & Partner mbB
Patent- und Rechtsanwälte
Joachimsthaler Straße 10-12
10719 Berlin (DE)**

(56) References cited:
**US-A1- 2004 167 705     US-A1- 2011 066 322**

• **DaimlerChrysler, SINTEF, Glasgow University,
Hamilton Institute, Lund University: "Vehicle
state observer activity report", , 18 February 2005
(2005-02-18), XP002732761, Retrieved from the
Internet:
URL:www.hamilton.ie/cemacs/reports/CEmACS
_ D4.pdf [retrieved on 2014-11-21]**

**Description**

FIELD OF THE INVENTION

The invention relates to control of vehicle systems and, more particularly, to method for estimating a total mass of a vehicle or a vehicle payload.

BACKGROUND OF THE INVENTION

Currently, production shift controllers do not perform vehicle mass estimation.

Vehicle mass estimation systems are known, as e.g. described in documents US 2011/0066322 A1 and US 2004/0167705.

Settings used in prior art shift controllers are determined by weighing considerations between shift performance and robustness for the expected mass fluctuations. However, before shifting, prior art shift controllers may derive a current load using information from a torque converter working point, which is used as an input for the shift controller, and adapting the feed forward shifting profiles. Communication with telematics systems have not been implemented in prior art shift controllers.

It would be advantageous to develop a method for estimating a total mass of a vehicle or a vehicle payload by using currently available sensors found in a vehicle transmission.

SUMMARY OF THE INVENTION

Presently provided by the invention, a method for estimating a total mass of a vehicle or a vehicle payload by using currently available sensors found in a vehicle transmission, has surprisingly been discovered.

In one embodiment, the present invention is directed to a method for estimating a total mass of a vehicle is provided. The method comprises the steps of providing a plurality of speed sensors configured to sense a rotational speed of a plurality of components of a driveline of the vehicle, estimating an output torque of the driveline of the vehicle, calculating gear losses based on the output torque of the driveline, estimating friction losses based on a rotational speed of a torque converter, calculating a rolling resistance of the vehicle, calculating an inertia of the vehicle, and estimating the total mass of the vehicle based on the inertia of the vehicle.

In another embodiment, the present invention is directed to a method for estimating a total mass of a vehicle. The method comprises the steps of providing a plurality of speed sensors configured to sense a rotational speed of a plurality of components of a driveline of the vehicle, estimating an output torque of the driveline of the vehicle using a rotational speed of a power source of the vehicle, a rotational speed of a portion of the torque converter, and at least one lookup table, calculating gear losses based on the output torque of the driveline, a gear mesh efficiency, and a number of gear meshes, estimating friction losses based on a rotational speed of a torque converter, calculating a rolling resistance of the vehicle as a function of the total mass of the vehicle, the gravity constant, and a rolling friction, calculating an inertia of the vehicle, calculating an acceleration of the vehicle by deriving an output speed of the driveline, estimating the total mass of the vehicle based on the inertia of the vehicle, and using at least one of an estimator and a state observer to improve the estimation of the total mass of the vehicle.

Various aspects of this invention will become apparent to those skilled in the art from the following detailed description of the preferred embodiment, when read in light of the accompanying drawings.

BRIEF DESCRIPTION OF THE DRAWINGS

FIG. 1 is a schematic illustration of a vehicle driveline including an online mass estimation system according to the present invention;

FIG. 2 is an exemplary graph plotting an estimated payload of a vehicle versus time;

FIG. 3 is a schematic illustration of a Kalman filter, which may form a portion of the online mass estimation system illustrated in FIG. 1; and

FIG. 4 is an exemplary graph plotting a propagated state estimate and an actual state trajectory versus time.

DETAILED DESCRIPTION OF THE PREFERRED EMBODIMENTS

It is to be understood that the invention may assume various alternative orientations and step sequences, except where expressly specified to the contrary. It is also to be understood that the specific devices and processes illustrated in the attached drawings, and described in the following specification are simply exemplary embodiments of the inventive concepts defined herein. Hence, specific dimensions, directions or other physical characteristics relating to the embodiments disclosed are not to be considered as limiting, unless expressly stated otherwise.

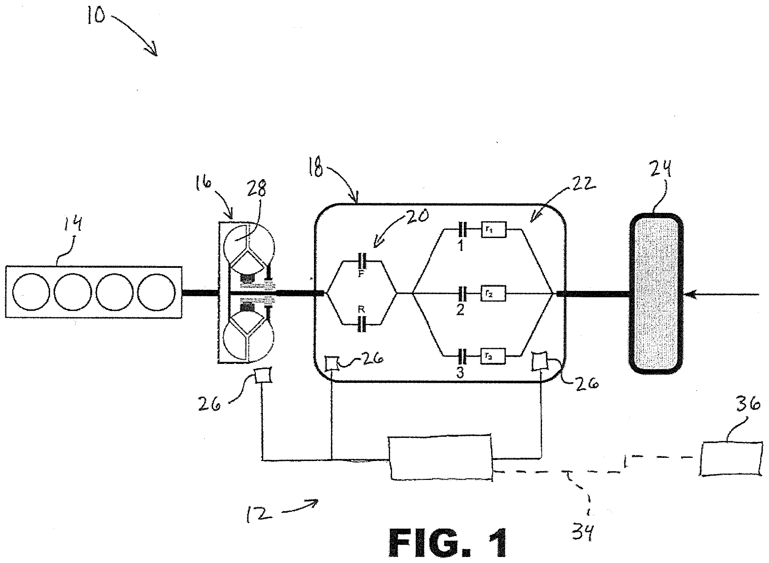

FIG. 1 shows an exemplary driveline 10 for a vehicle (not shown) incorporating an online mass estimation system 12. The online mass estimation system 12 is able to determine information about a total mass of the vehicle or a payload transported by the vehicle. A power source 14, which may be an internal combustion engine, for example, applies a rotational force to a torque converter 16. The rotational force, or input torque, applied to the torque converter 16 results in an output torque ($T_{tur}$), which is used to drive a transmission 18. The transmission 18 includes a direction selector 20 and a range clutch arrangement 22. The direction selector 20 is used to place the transmission 18 in one of a forward operating condition and a reverse operating condition. The range clutch arrangement 22 shown includes three drive ratios, which are chosen based on an operating need of the vehicle. It is understood that the range clutch arrangement 22 may include another number of drive ratios. A rotational inertia 24 ($J_{veh,eq}$) of the vehicle, which exhibits a similar dynamic behavior to a remaining portion of the driveline 10 of the vehicle, is represented schematically in FIG. 1.

A behavior of the driveline 10 may be described by the following equation:

$$\frac{T_{tur} - T_{gear\ loss} - T_{friction\ loss}}{r_{1,2,3}} = J_{veh,eq}\dot{\omega}_{out} + T_{roll} + T_{drag}$$

A loss of torque within the transmission due to gearing and friction are respectively indicated as $T_{gear\ loss}$ and $T_{friction\ loss.}$

By combining information from a plurality of speed sensors 26 in the transmission 18 with some additional parameters it is possible to estimate a total inertia of the vehicle, and thus a total mass of the vehicle. The plurality of speed sensors 26 are configured to sense a rotational speed of a plurality of components of the driveline 10. The output torque ($T_{tur}$) is estimated using at least one lookup table using a rotation speed of the power source 14 speed and a rotational speed of a turbine portion 28 of the torque converter 16 ($n_e$, $n_{tur}$) as inputs for the lookup table.

$$T_{tur} = f(n_e, n_{tur})$$

The gear losses are a function of the output torque ($T_{tur}$), a gear mesh efficiency ($\eta$) and a number of gear meshes (n).

$$T_{gear\ loss} = T_{tur}(1 - \eta^n)$$

The friction losses are estimated using a function based on a rotational speed of a turbine portion 28 of the torque converter 16 ($n_{tur}$).

$$T_{friction\ loss} = f(n_{tur})$$

An equivalent vehicle inertia is computed from the total mass of the vehicle ($m_{veh}$, which is estimated) and a radius of each of the wheels ($r_w$).

$$J_{veh} = m_{veh} r_w^2$$

A vehicle acceleration is derived from a derivative of an output speed ($\dot{\omega}_{out}$).

$$\dot{\omega}_{out} = \frac{d\left(\frac{2\pi \cdot n_{out}}{60}\right)}{dt}$$

A rolling resistance ($T_{roll}$) is a function of the total mass of the vehicle ($m_{veh}$), the gravity constant ($g$) and a rolling friction ($c_{roll}$).

$$T_{roll} = m_{veh} \cdot g \cdot c_{roll} = \frac{J_{veh}}{r_w^2} \cdot g \cdot c_{roll}$$

The drag loss ($T_{drag}$) is a function of a speed of the vehicle and a frontal area of the vehicle (which considers air density and a drag coefficient, as well). As the speeds of the vehicle the online mass estimation system 12 is most typically used with are typically low, the effects of drag from air may be considered a negligible influence and thus can be estimated as being substantially equal to zero.

$$T_{drag} \approx 0$$

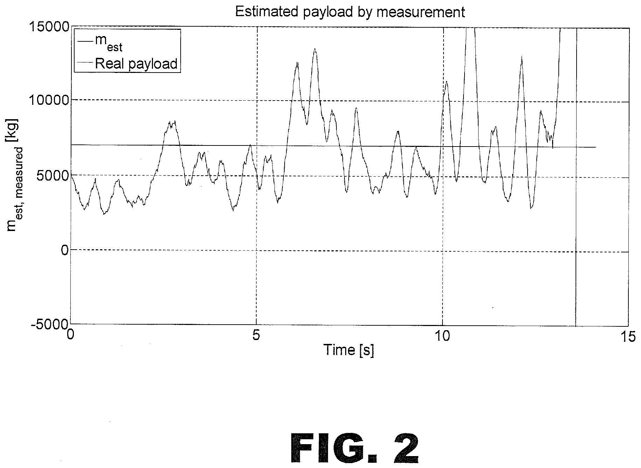

A mass estimation example performed by the online mass estimation system 12 using the method described above is shown in FIG. 2. Using only discrete measurements for the mass estimation typically results in an inaccurate mass estimation. While a mean estimate is better, the mean estimate may still be relatively inaccurate. The signal shown in FIG. 2 has large variations, which is typical for the signal generated by the online mass estimation system 12.

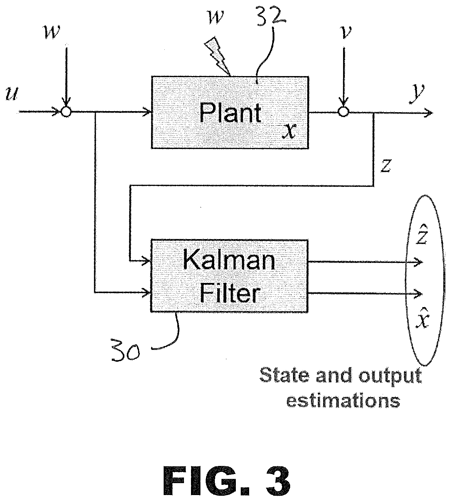

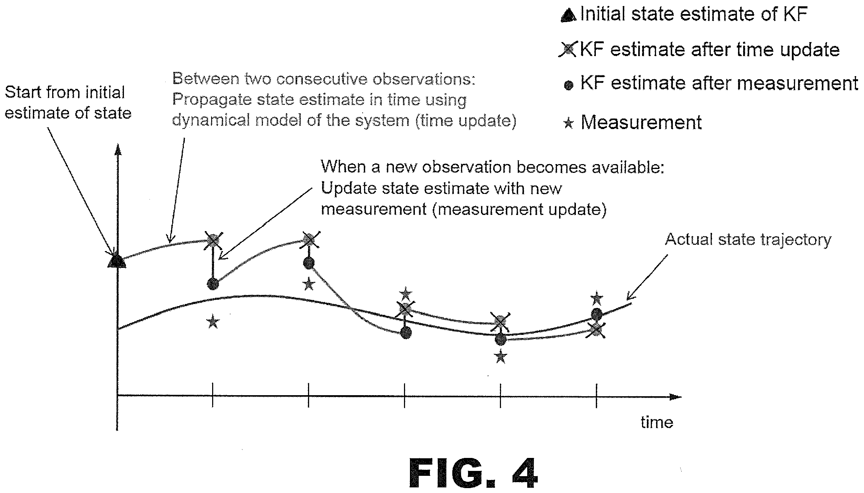

Introducing an estimator and/or a state observer can improve the mass estimation of the online mass estimation system 12 significantly. FIG. 3 shows a possible solution which makes use of a Kalman filter 30. The Kalman filter 30 uses the inputs to a plant 32 (which in this case, is the driveline 10) and, based on a model of the driveline 10, the online mass estimation system 12 computes a state of the driveline 10 in the near future. The measurements and computed states are combined with weighting factors to produce a more reliable output. The latest estimate, as described hereinabove, may be used as a start point for the model of the driveline 10. An example of an output of the online mass estimation system 12 including the Kalman filter 30 is shown in FIG. 4.

As mentioned above, the use of the Kalman filter 30 requires the model of the driveline 10 to be present. To estimate the total mass of the vehicle, the same formulas used for the total mass estimation measurement can also be used for the model of the driveline 10. The difference is, besides the input torque, an estimated acceleration (in a very near future of operation) is used instead of the vehicle acceleration that is measured. With the current states, the total torque losses are then computed. This process provides a total mass estimation based on the model of the driveline 10. The total mass estimation may show a noisy behavior as well, and is sensitive to drifting due to errors in the model of the driveline 10. By combining the total mass estimation and the model of the driveline 10 with a tuned weighting factor, a more reliable final total mass estimation is possible. To prevent the model of the driveline 10 from drifting, a most recent total mass estimation is used as a start point for the next estimate of the model of the driveline 10.

Using state observers, in whatever form, is one of the possibilities to have an accurate total mass estimate for the vehicle or a payload transported by the vehicle.

The scope of the invention also includes supplementary methods to estimate a mass of the payload transported by the vehicle. Each of the supplementary methods requires the use of at least one additional sensor which, depending on the application, may or may not be practical to include. Each of the supplementary methods to estimate a mass of the payload transported by the vehicle is detailed below.

- A first supplementary method includes installing at least one strain gauge in a lifting device forming a portion of the vehicle. Techniques similar to those that are described above could be incorporated into the online mass estimation system 12 to increase reliability, such as reducing an effect of oscillations, gauge drift over time, and temperature sensitivity.
- A second supplementary method includes installing a pressure sensor in a lifting device forming a portion of the vehicle including the online mass estimation system 12, where the lifting device is a hydraulic lifting device. A pressure required to lift or hold the payload can be used to determine a mass of the payload.

To improve a quality of the payload mass estimation using one of the above described supplementary methods, an additional acceleration sensor may be installed and in communication with the online mass estimation system 12. An improved accuracy of the acceleration of the vehicle can also be used to improve the total mass estimation.

The method described above and the vehicle incorporating the online mass estimation system 12 makes it possible to perform a total mass estimation of the vehicle without a need for increasing a number and type of sensors in the transmission 18. Without requiring additional sensors, the method and the vehicle incorporating the online mass estimation system 12 provides a large amount of freedom to use the method in varying situations and in different applications without requiring adjustments. Accordingly, through use of method and the vehicle incorporating the online mass estimation system 12, functionality is added to existing vehicles including similar transmissions.

The estimated total mass of the vehicle obtained using the method and the online mass estimation system 12 can be used for several purposes. The online mass estimation system 12 may use the estimated total mass as an additional input to adapt a shift strategy (and thus a shift controller) and a plurality of actuator outputs to a current load, resulting in improved shifting performance of the vehicle. Further, the estimated total mass or payload of the vehicle may be useful to a vehicle controller as well. The estimated total mass or payload of the vehicle could be used to enhance functionality of the vehicle controller through detection of an overload condition. In response to the overload condition, a vehicle stability system may be activated or enhances. The vehicle stability system may be used to prevent a high speed cornering of the vehicle based on the load, for example, in addition to triggering other safety related systems.

The estimated total mass or payload obtained using the method and the online mass estimation system 12 may be communicated through a wireless link 34 to one or more external device 36. The external device 36 may be used to perform additional processing on the estimated total mass and payload to further enhance functionality online mass estimation system 12 and the external device 36. As a non-limiting example, the estimated total mass may be used in a warehouse management software to track usage of the vehicle usage and a movement of a load performed by the vehicle. A bi-directional connection between the external device 36 and the vehicle incorporating the online mass estimation system 12 offers even further functionality. As non-limiting examples, the estimated total mass can be compared with an expected total mass to adjust the total estimated mass and to detect an incorrect pick-up of a load. The total expected mass and detection of the incorrect pick-up of the load can be provided as input data for an on-board diagnostics system of the vehicle.

In accordance with the provisions of the patent statutes, the present invention has been described in what is considered to represent its preferred embodiments.

**Claims**

1. A method for estimating a total mass of a vehicle, the method comprising the steps of:

   providing a plurality of speed sensors configured to sense a rotational speed of a plurality of components of a driveline of the vehicle;
   estimating an output torque of the driveline of the vehicle;
   calculating gear losses based on the output torque of the driveline;
   estimating friction losses based on a rotational speed of a portion of the driveline of the vehicle;
   calculating a rolling resistance of the vehicle;
   calculating an inertia of the vehicle;
   estimating the total mass of the vehicle based on the inertia of the vehicle; **characterised in that** it is further configured for using the total mass of the vehicle to adapt a shift strategy of the vehicle.

2. The method according to claim 1, further comprising the step of using at least one of an estimator and a state observer to improve the estimation of the total mass of the vehicle,

3. The method according to claim 2, wherein the step of using at least one of an estimator and a state observer to improye the estimation of the total mass of the vehicle is performed using a Kalman filter.

4. The method according to claim 2, wherein the step of using at least one of an estimator and a state observer to improve the estimation of the total mass of the vehicle is performed using a model of the driveline of the vehicle to calculate a future state of the driveline,

5. The method according to claim 4, wherein the estimation of the total mass of the vehicle, the model of the driveline of the vehicle, and a tuned weighting factor are combined to determine a final mass estimation.

6. The method according to claim 1, wherein the step of estimating an output torque of the driveline of the vehicle is performed using at least one of a rotational speed of a power source of the vehicle, a rotational speed of a portion of the driveline of the vehicle, and at least one lookup table.

7. The method according to claim 1, wherein the step of calculating gear losses based on the output torque of the driveline is a function of a gear mesh efficiency and a number of gear meshes.

8. The method according to claim 1, wherein the step of calculating a rolling resistance of the vehicle is a function of the total mass of the vehicle, the gravity constant, and a rolling friction.

9. The method according to claim 1, further comprising the step of calculating an acceleration of the vehicle by deriving an output speed of the driveline.

10. The method according to claim 1, further comprising the step of providing a strain gauge installed in a lifting device forming a portion of the vehicle.

11. The method according to claim 1, further comprising the step of providing a pressure sensor in a hydraulic lifting device forming a portion of the vehicle.

12. The method according to claim 1, further comprising the step of providing an acceleration sensor to improve an accuracy of the total mass estimation.

13. The method according to claim 1, further comprising the step of using the total mass of the vehicle to detect an overload condition of the vehicle.

14. The method according to claim 1, further comprising the step of providing the total mass of the vehicle to an external device through a wireless link,

15. The method according to one of claims 1, 3, 4 and 5,

wherein the step of estimating an output torque of the driveline of the vehicle is performed using a rotational speed of a power source of the vehicle, a rotational speed of a portion of the driveline of the vehicle, and at least one lookup table;
wherein the step of calculating gear losses based on the output torque of the driveline is a function of a gear mesh efficiency and a number of gear meshes;
wherein the step of calculating a rolling resistance of the vehicle is a function of the total mass of the vehicle, the gravity constant, and a rolling friction;
the method further comprising the steps of:

calculating an acceleration of the vehicle by deriving an output speed of the driveline; and
using at least one of an estimator and a state observer to improve the estimation of the total mass of the vehicle.

**Patentansprüche**

1. Verfahren zum Schätzen einer Gesamtmasse eines Fahrzeugs, wobei das Verfahren die folgenden Schritte umfasst:

Bereitstellen einer Vielzahl von Geschwindigkeitssensoren, die konfiguriert sind, um eine Drehgeschwindigkeit einer Vielzahl von Komponenten eines Antriebsstrangs des Fahrzeugs zu erfassen;
Schätzen eines Abtriebsdrehmoments des Antriebsstrangs des Fahrzeugs;
Berechnen von Getriebeverlusten basierend auf dem Abtriebsdrehmoment des Antriebsstrangs;
Schätzen von Reibungsverlusten basierend auf einer Drehgeschwindigkeit eines Abschnitts des Antriebsstrangs des Fahrzeugs;
Berechnen eines Rollwiderstands des Fahrzeugs;
Berechnen einer Trägheit des Fahrzeugs;
Schätzen der Gesamtmasse des Fahrzeugs basierend auf der Trägheit des Fahrzeugs;
**dadurch gekennzeichnet, dass** es weiter konfiguriert ist zum
Verwenden der Gesamtmasse des Fahrzeugs, um eine Schaltungsstrategie des Fahrzeugs anzupassen.

2. Verfahren nach Anspruch 1, weiter umfassend den Schritt des Verwendens mindestens eines Schätzers und eines Zustandsbeobachters, um die Schätzung der Gesamtmasse des Fahrzeugs zu verbessern.

3. Verfahren nach Anspruch 2, wobei der Schritt des Verwendens eines Schätzers und/oder eines Zustandsbeobachters zur Verbesserung der Schätzung der Gesamtmasse des Fahrzeugs unter Verwendung eines Kalman-Filters durchgeführt wird.

4. Verfahren nach Anspruch 2, wobei der Schritt des Verwendens eines Schätzers und/oder eines Zustandsbeobachters zur Verbesserung der Schätzung der Gesamtmasse des Fahrzeugs unter Verwendung eines Modells des Antriebsstrangs des Fahrzeugs durchgeführt wird, um einen zukünftigen Zustand des Antriebsstrangs zu berechnen.

5. Verfahren nach Anspruch 4, wobei die Schätzung der Gesamtmasse des Fahrzeugs, das Modell des Antriebsstrangs des Fahrzeugs und ein abgestimmter Gewichtungsfaktor kombiniert werden, um eine abschließende Masseschätzung zu bestimmen.

6. Verfahren nach Anspruch 1, wobei der Schritt des Schätzens eines Abtriebsdrehmoments des Antriebsstrangs des Fahrzeugs unter Verwendung einer Drehgeschwindigkeit einer Energiequelle des Fahrzeugs und/oder einer Drehgeschwindigkeit eines Abschnitts des Antriebsstrangs des Fahrzeugs und/oder mindestens einer Nachschlagetabelle durchgeführt wird.

7. Verfahren nach Anspruch 1, wobei der Schritt des Berechnens von Getriebeverlusten basierend auf dem Abtriebsdrehmoment des Antriebsstrangs eine Funktion eines Verzahnungswirkungsgrads und einer Anzahl von Verzahnungen ist.

8. Verfahren nach Anspruch 1, wobei der Schritt des Berechnens eines Rollwiderstands des Fahrzeugs eine Funktion der Gesamtmasse des Fahrzeugs, der Gravitationskonstante und einer Rollreibung ist.

9. Verfahren nach Anspruch 1, weiter umfassend den Schritt des Berechnens einer Beschleunigung des Fahrzeugs durch Ableiten einer Abtriebsgeschwindigkeit des Antriebsstrangs.

10. Verfahren nach Anspruch 1, weiter umfassend den Schritt des Bereitstellens eines Dehnungsmessers, der in einer einen Abschnitt des Fahrzeugs bildenden Hebevorrichtung installiert ist.

11. Verfahren nach Anspruch 1, weiter umfassend den Schritt des Bereitstellens eines Drucksensors in einer einen Abschnitt des Fahrzeugs bildenden hydraulischen Hebevorrichtung.

12. Verfahren nach Anspruch 1, weiter umfassend den Schritt des Bereitstellens eines Beschleunigungssensors, um eine Genauigkeit der Gesamtmasseschätzung zu verbessern.

13. Verfahren nach Anspruch 1, weiter umfassend den Schritt des Verwendens der Gesamtmasse des Fahrzeugs, um eine Überbelastungssituation des Fahrzeugs zu detektieren.

14. Verfahren nach Anspruch 1, weiter umfassend den Schritt des Bereitstellens der Gesamtmasse des Fahrzeugs an eine externe Vorrichtung mittels einer drahtlosen Verbindung.

15. Verfahren nach einem der Ansprüche 1, 3, 4 und 5,

wobei der Schritt des Schätzens eines Abtriebsdrehmoments des Antriebsstrangs des Fahrzeugs unter Verwendung einer Drehgeschwindigkeit einer Energiequelle des Fahrzeugs, einer Drehgeschwindigkeit eines Abschnitts des Antriebsstrangs des Fahrzeugs und mindestens einer Nachschlagetabelle durchgeführt wird;
wobei der Schritt des Berechnens von Getriebeverlusten basierend auf dem Abtriebsdrehmoment des Antriebsstrangs eine Funktion eines Verzahnungswirkungsgrads und einer Anzahl von Verzahnungen ist;
wobei der Schritt des Berechnens eines Rollwiderstands des Fahrzeugs eine Funktion der Gesamtmasse des Fahrzeugs, der Gravitationskonstante und einer Rollreibung ist;
wobei das Verfahren die folgenden Schritte umfasst:

Berechnen einer Beschleunigung des Fahrzeugs durch Ableiten einer Ausgangsgeschwindigkeit des Antriebsstrangs; und
Verwenden eines Schätzers und/oder eines Zustandsbeobachters, um die Schätzung der Gesamtmasse des Fahrzeugs zu verbessern.

**Revendications**

1. Procédé pour estimer une masse totale d'un véhicule, le procédé comprenant les étapes constituées par :

   la fourniture d'une pluralité de capteurs de vitesse qui sont configurés pour détecter une vitesse de rotation d'une pluralité de composants d'une chaîne cinématique du véhicule ;
   l'estimation d'un couple de sortie de la chaîne cinématique du véhicule ;
   le calcul de pertes d'engrenages sur la base du couple de sortie de la chaîne cinématique ;
   l'estimation de pertes de friction sur la base d'une vitesse de rotation d'une partie de la chaîne cinématique du véhicule ;
   le calcul d'une résistance au roulement du véhicule ;
   le calcul d'une inertie du véhicule ; et
   l'estimation de la masse totale du véhicule sur la base de l'inertie du véhicule ;
   **caractérisé en ce qu'**il est en outre configuré pour utiliser la masse totale du véhicule pour adapter une stratégie de changement de vitesse du véhicule.

2. Procédé selon la revendication 1, comprenant en outre l'étape d'utilisation d'au moins un moyen pris parmi un moyen d'estimation et un moyen d'observation d'état pour améliorer l'estimation de la masse totale du véhicule.

3. Procédé selon la revendication 2, dans lequel l'étape d'utilisation d'au moins un moyen pris parmi un moyen d'estimation et un moyen d'observation d'état pour améliorer l'estimation de la masse totale du véhicule est réalisée en utilisant un filtre de Kalman.

4. Procédé selon la revendication 2, dans lequel l'étape d'utilisation d'au moins un moyen pris parmi un moyen d'estimation et un moyen d'observation d'état pour améliorer l'estimation de la masse totale du véhicule est réalisée en utilisant un modèle de la chaîne cinématique du véhicule pour calculer un état futur de la chaîne cinématique.

5. Procédé selon la revendication 4, dans lequel l'estimation de la masse totale du véhicule, le modèle de la chaîne cinématique du véhicule et un facteur de pondération accordé sont combinés pour déterminer une estimation de masse finale.

6. Procédé selon la revendication 1, dans lequel l'étape d'estimation d'un couple de sortie de la chaîne cinématique du véhicule est réalisée en utilisant au moins un élément informationnel pris parmi une vitesse de rotation d'une source d'alimentation du véhicule, une vitesse de rotation d'une partie de la chaîne cinématique du véhicule et au moins une table de consultation.

7. Procédé selon la revendication 1, dans lequel l'étape de calcul de pertes d'engrenages sur la base du couple de sortie de la chaîne cinématique est une fonction d'une efficacité d'égrènement d'engrenages et d'un nombre d'engraissements d'engrenages.

8. Procédé selon la revendication 1, dans lequel l'étape de calcul d'une résistance au roulement du véhicule est une fonction de la masse totale du véhicule, de la constante gravitationnelle et d'une friction par roulement.

9. Procédé selon la revendication 1, comprenant en outre l'étape de calcul d'une accélération du véhicule en dérivant une vitesse de sortie de la chaîne cinématique.

10. Procédé selon la revendication 1, comprenant en outre l'étape de fourniture d'une jauge dynamométrique qui est installée dans un dispositif de levage qui forme une partie du véhicule.

11. Procédé selon la revendication 1, comprenant en outre l'étape de fourniture d'un capteur de pression dans un dispositif de levage hydraulique qui forme une partie du véhicule.

12. Procédé selon la revendication 1, comprenant en outre l'étape de fourniture d'un capteur d'accélération pour améliorer une précision de l'estimation de masse totale.

13. Procédé selon la revendication 1, comprenant en outre l'étape d'utilisation de la masse totale du véhicule pour détecter une condition de surcharge du véhicule.

**14.** Procédé selon la revendication 1, comprenant en outre l'étape de fourniture de la masse totale du véhicule à un dispositif externe par l'intermédiaire d'une liaison sans fil.

**15.** Procédé selon l'une des revendications 1, 3, 4 et 5,

dans lequel l'étape d'estimation d'un couple de sortie de la chaîne cinématique du véhicule est réalisée en utilisant une vitesse de rotation d'une source d'alimentation du véhicule, une vitesse de rotation d'une partie de la chaîne cinématique du véhicule et au moins une table de consultation ;
dans lequel l'étape de calcul de pertes d'engrenages sur la base du couple de sortie de la chaîne cinématique est une fonction d'une efficacité d'égrènement d'engrenages et d'un nombre d'égrènements d'engrenages ;
dans lequel l'étape de calcul d'une résistance au roulement du véhicule est une fonction de la masse totale du véhicule, de la constante gravitationnelle et d'une friction par roulement ;
le procédé comprenant en outre les étapes constituées par :

le calcul d'une accélération du véhicule en dérivant une vitesse de sortie de la chaîne cinématique ; et
l'utilisation d'au moins un moyen pris parmi un moyen d'estimation et un moyen d'observation d'état pour améliorer l'estimation de la masse totale du véhicule.

**FIG. 1**

Estimated payload by measurement

FIG. 2

EP 3 044 552 B1

**FIG. 3**

FIG. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20110066322 A1

- US 20040167705 A